# EUROPEAN PATENT APPLICATION

(11) **EP 1 257 103 A1**
(43) Date of publication of application: **13.11.2002**
(21) Application number: 01440130.1
(22) Date of filing: 11.05.2001
(51) Int. Cl.: H04L 25/06

(54) **Circuitry for determining levels in data flows**

(71) Applicant: ALCATEL, 75008 Paris (FR)
(72) Inventor: Lautenschläger, Wolfram, 74343 Sachsenheim (DE); Dupas, Arnaud, 91240 St. Michel sur Orge (FR); Pons, Alain, 91340 Ollainville (FR); Jacquinot, Jean-Claude, 94270 Le Kremlin Bicetre (FR); Lavigne, Bruno, 92160 Antony (FR); Chiaroni, Dominique, 92160 Antony (FR)
(74) Representative: KOHLER SCHMID + PARTNER

(57) **Abstract**

A device for determining level values in data flows comprising different level values, is characterised by means for performing the following steps:
1.) detecting the change between different part-data flows or packets,
2.) starting an integration of the next part-data flow,
3.) holding the output value of the integration device,
4.) deriving a level value from the output value of the integration device.

Advantages of the invention are short building-up time and thus a better use of the individual channels, especially optical channels.

## Description

The invention concerns a device for determining level values in data flows comprising different level values.

In exchanges for optical data flows sent in packet mode (another term is burst mode), (packet or burst in typical range of 1 to 10 microseconds), the data flow consists of a great number of packets spaced apart one from the other, each packet containing information necessary for sending this packet to its destination and further information as deemed to be necessary besides of the information proper (the payload) to be transported, e.g. computer data, language data, television data, and so on. At the beginning of each packet (i.e. in its packet head), a number of quickly varying bits (i.e. a series of 0,1,0,1,0,1, etc.), more generally spoken a field containing a fixed pattern of bits, is provided in order to facilitate synchronisation for packet reading means. The different packets may origin from different sources and may have passed different distances on the optical path, for example an optical fibre, which results in that the individual packets arriving from different sources at a node or exchange have different levels of optical power, often extremely different levels. For correctly detecting the contents of an individual packet, a correct threshold must be applied.

Optical signals do not comprise any polarity (according to the state of the art) but the data transfer occurs by basic-band modulation of the optical power. (After converting part of the optical power into the electrical domain, a relative high optical power leads to a relatively high electrical power (electric current multiplied by electric voltage)). Differences in the attenuation of different packets results in a displacement of the logical high level (level "1"), whereas the logical level "0" (optical power = 0) is constant at 0 watts of optical power.

The problems discussed here are mainly connected with optical data transfer, but the teachings of the invention are not restricted to optical information transfer and may possibly be used for handling of electrical signals which are not connected to optical signals.

For determining an appropriate threshold value, it is generally possible to form a mean value by means of low pass filtering, more generally, to perform an integration, however, the low pass filtering is either too slow or, if it is fast enough, it comprises fluctuations. The basic idea is to use the packet head for determining the power level of the complete packet. In a packet head for purposes of fast synchronisation it is usual to have a sufficient great number of varying bits, that is that a bit "0" follows a bit "1" which again is followed by a bit "0" and so on, thus longer series of only zeros or only ones are not present in the packet head. After the packet head has been evaluated, the mean value detection is stopped and the mean value found during the evaluation of the packet head is assumed to be the power level of the complete packet and is used also for the remainder of the packet, if needed, e.g. for detecting the data of the payload.

Input interfaces of switches/routing nodes should support packets with different optical powers. Therefore, it is an object of the invention, to handle these packets.

This object is, according to the characterising part of claim 1, attained in that the device comprises means for performing the following steps:
- 1.): detecting the change between different part-data flows or packets,
- 2.): starting an integration of the next part-data flow,
- 3.): holding the output value of the integration device,
- 4.): deriving a level value from the output value of the integration device.

The invention allows to design the low pass or integration device for quick variations between 0 and 1, thus the low pass allows a quick determination of the power of the packet. Advantages of the invention are short building-up time and thus a better use of the individual channels, especially optical channels. The minimum length of a packet may, therefore, be reduced, thereby allowing a better matching to the necessities of the traffic. Of course, reducing the length of packets may be performed possibly only in connection with standard setting committees. The invention has further the advantage of an increased dynamic range.

When performing the invention, it is necessary to provide means for detecting the start of a packet, further, because of high bit-rates the mechanical design of the signal ways may require a special design in order to ensure that commands arrive at the correct time at the correct place, in other words, it must be ensured that the detection of the power level of a special packet results in a corresponding manipulation exactly at that packet, possibly at some distance from the location where the power level was detected.

An advantage of the invention is that the power or signal level of each individual packet can be determined with sufficient reliability. For the purposes of the invention, it is assumed that the power level in the packet head is the same as in the remainder of the packet or packet.

The result obtained for each packet may be used in a plurality of ways:
In a preferred embodiment of the invention the signal level or power determined for a packet is used for detecting the content of this special packet. In order to attain this, a threshold value is set in response to the signal level obtained. A good choice for many cases will be to choose the threshold value at 50% of the maximum signal value.

The results of the detection of the content of the packet may be evaluated in different ways: in an example, it is determined if this special packet is to be sent to a user very near to the exchange where the detection was made. In this case, the signal is sent in form of electrical signals or coupled to another optical fibre and sent to the user. In both cases, this packet does not need to be transported further by means of the optical fibre on which it arrived. Therefore, it is useful, as known per se, to give a command to a part of the exchange in order to erase the packet and to make room for insertion of another packet onto the optical fibre.

If, as a result of the above mentioned detection, it is determined that the packet has to be transported further on the fibre, it is possible not to take any special steps; however according to a preferred embodiment of the invention it is also possible to use the level detected for an amplification of the signal level to a higher level, especially to a kind of standard level such that all optical signals which have passed the exchange will leave the exchange on the fibre with an enlarged and standardised level. In such way the optical signals are ready for further transmittal via the optical fibre, during which transmittal the signals will undergo some attenuation.

An example of a further embodiment of the invention is that the level detected for an individual packet as mentioned above is used to bring all packets coming into the exchange via a special fibre by amplification to a kind of standard level, and to perform further manipulation of the packets after such amplification. The further manipulation may be reading the information of each packet, deciding if it has to be transported further on the fibre, if it has to be coupled out of the fibre and sent in form of electrical signals or optical signals to a further destination.

Amplification of all signals arriving at an exchange to a standard level may facilitate detecting the content of the individual packets.

Further, in such a way an advantageous new exchange is created by the invention which exchange comprises amplification of the optical signals in contrast to known exchanges where no such amplification of optical signals is performed.

A further object of the invention is the realisation of a fast optical power equalisation able to operate with consecutive packets (guard-band in the range of 10-100 ns).

Further features and advantages of the invention will be apparent from the following description of preferred embodiments of the invention in connection with the drawings which show features essential for the invention, and in connection with the claims. The individual features may be realised individually or in any combination in an embodiment of the invention.

In the drawings
Fig 1 is a representation of two packets with a gap between them, the packets having different levels of optical power;
Fig. 2 is a schematic representation of a first example of a means for determining the power level of an incoming signal;
Fig. 3 is a second embodiment of a means for creating a quantity dependent on optical power and for detecting the content of packets;
Fig. 4 is a representation of an overall arrangement for detecting the optical power of packets having different power levels, and for amplification to a standardised level of the individual packets, a delay-line for the optical signals being provided by a loop of the optical fibre,
Fig 5 is a representation of an arrangement for an optical power equaliser comprising an optical power measurement means, a linearising means and a non-linear amplification means.
Fig. 6 shows a principle of an optical node or exchange with amplification means.

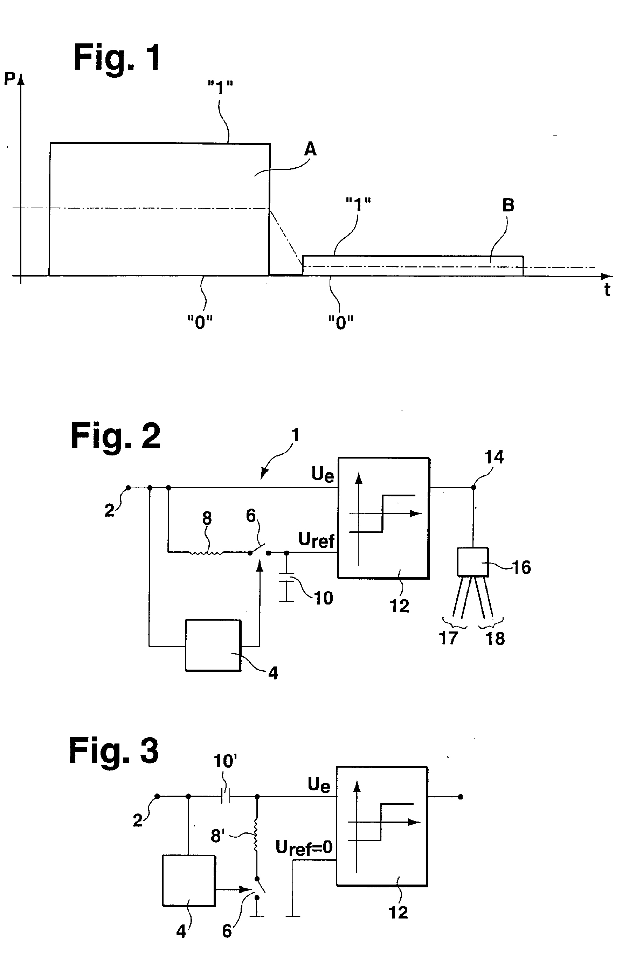

Fig. 1 shows schematically in the horizontal axis the time t, in the vertical axis the optical power P. A packet A is shown having a high power level, and an other packet B is shown having a low power level. The logic level "0" is identical for the two packets, namely zero watts. If each packet is to be detected by means of a threshold which is in the middle between the high level 1 and the low level 0, for the two packets different threshold values have to be set for a correct detection.

Though fig. 1 shows optical power levels, fig. 1 could also be understood as representation of the levels of electrical signals, which have been derived by conversion of a part of the optical power by means of a photodiode into electrical signals. In this case, the vertical axis may be understood as a voltage.

In fig. 2 the scheme of an arrangement 1 is shown to an input terminal 2 of which an electrical signal derived from an optical signal and representative for the optical power is fed. To the input 2 a detector 4 is connected which detects start of a packet. This is possible since between packets a guard gap is provided and within the gap no optical (and therefore electrical) signal is present. The detector 4 switches a switching element 6 into the conducting state immediately after detecting the start of a packet. The signal from the input 2 is in the form of DC pulses and charges, via a resistor 8, a capacitor 10, the other terminal of which is connected to ground. The resistor 8 and the capacitor 10 together form a low pass filter. Across the capacitor 10, a direct current voltage builds up, which voltage is proportional to the mean power of the pulses after receipt of a certain number of pulses, which number is dependent on the time constant of the just mentioned low pass filter. After a predetermined part of the packet head has passed (but not later than at the end of the packet head), which fact in this example is detected by counting a predetermined number of bits = pulses of the voltage at input 2 by the detector 4, the detector 4 sets the switching element 6 into the non-conducting state. Thus the formation of a mean value is stopped and the capacitor 10 holds the direct current voltage built up until this moment. The arrangement is a sample-and-hold means. The voltage at the capacitor 10 is in the example used for setting a threshold value in a discriminator 12, to a data input of which the terminal 2 is coupled and feds a voltage Ue to the discriminator 12.

A data output terminal 14 of the discriminator 12 delivers, in dependence of the discrimination made, a logical signal 1 or a logical signal 0 for each data bit. Thus the information (control information and payload) of the original optical signal is available at the terminal 14. In a special form of this example, that information is transferred to local users via interface means 16 and electrical lines 17 as well as optical lines 18. The device of fig. 2 performs the steps 1 to 4 of claim 1, as is clear from the above description. However, it also performs steps 7 and 8 indicated in claim 3, at least in parts.

Fig. 3 differs from fig. 2 in that it comprises a high pass filter instead of a low pass filter. For this purpose, the capacitor 10' is connected in series to the input signal, whereas the resistor 8', the one terminal of which is connected to the capacitor 10' and to the input terminal of the discriminator 12, is connected with its other end by means of the switching element 6 to ground, as long as the detector 4 holds the switching element 6 in the conducting state. In fig. 3, the input voltage Ue to the discriminator 12 is the voltage at the input terminal 2 reduced by the voltage across the capacitor 10'. The elements 16, 17, 18 of fig. 2 are not shown. A high pass filter can be used here, because detection of the signal is performed in fig. 3. The high pass cannot be used to determine easily and directly the power of the packets, because no terminal of the capacitor (the voltage of which is a quantity dependent on the optical power) is connected to ground.

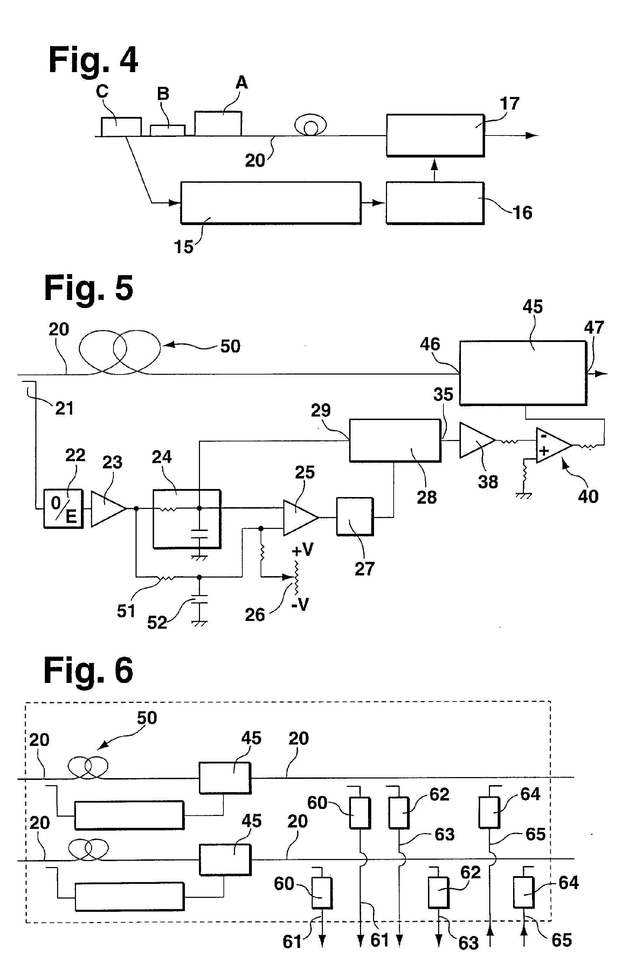

Fig. 4 shows the general structure of a fast power equaliser. The technical problem is to realise a fast optical power measurement (in the range of ns) in packet mode, in order to amplify the optical power on the fibre such that an equalisation is obtained. For this purpose, the mean power of individual packets A, B, C transported by an optical fibre 20 is measured in a measurement unit 15, the output signal of which is fed to a control unit 16, which controls a non-linear amplification means 17 such that the power for different packages is equalised. Fig. 5 shows an example for this arrangement.

In fig. 5, from the optical fibre 20 about 10% of the optical energy are coupled out by an optical coupler 21, the optical output signal of which is converted into the electrical domain via an opto-electrical transverter 22 which in the example is a 2.5 GHz photodiode. The transverter 22 is followed by an amplifier 23 which feds its signal via a filter 24 (a low pass filter in the example) to a circuitry which performs packet rhythm detection, and which, in the example, comprises as a main component a comparator 25.

The signal delivered by the 2.5 GHz photodiode is amplified by 23 and filtered by the filter 24 in order to hide the long series of zeros in payload. Such series of many only zeros in the payload could be otherwise wrongly be interpreted as a guard gap; accordingly bits different than zeros appearing thereafter could wrongly be interpreted as start of a new packet. This is avoided by the filter 24, the time constant of which is greater than that of the low pass filter 8, 10 in fig. 2. The filtered signal is fed to one input terminal of the comparator 25 and compared with a fixed value 26 in the comparator 25. It may be useful to add a part of the mean value of the signal before comparison to reduce the sensitivity to the noise. Such addition is performed by a further low pass filter 51, 52, the output of which is connected to the other input terminal (to which also the fixed value 26 is fed) of the comparator 25. This is a kind of negative feed-forward. The time constant of the further low pass filter 51, 52 is the same as that of the filter 24. The signal rise of the detected packet rhythm after at the output terminal of the comparator 25 is reshaped by means of a monostable multivibrator 27.

If the first bit of a packet is detected, the monostable multivibrator 27 is triggered, which switches a sample-and-hold-circuitry 28 into an active state for a predetermined time. The output signal from the amplifier 23 (more exactly from the filter 24) is also fed to a signal input 29 of the sample-and-hold-circuitry 29. At its signal output terminal 35, the mean value of the packet head appears.

The sample is taken at the beginning of the packet where the about first hundred bits are well-known and generally vary quickly between 0 and 1 in order to allow rapid synchronisation. Therefore, the sampled value depends only on the amplitude and not on the signal contents.

In the example, the current value at terminal 35 is not linear with the amplitude, so, after the characterisation of the relationship amplitude/current, a linearisation stage 38 is provided the input terminal of which is coupled with the output terminal 35.

The output signal of the circuitry 38 is fed to an input of a current driver 40 (reverser circuit), the output of which is fed to a current input of an optical non-linear amplifier 45 to attack the optical component in good conditions. Because the amplifier 45 is non-linear, it performs a multiplication of the optical signal, which was fed on the fibre 20 to an optical input 46, by the current delivered from the current driver 40. This multiplication allows to leave the optical signal for the logical level 0 at 0 watts, whereas the power for the high level "1" is raised by the required factor.

Since the evaluation of the signal within the different parts of fig. 5 needs some time during which the optical signal of the fibre 20 moves forward along the fibre probably some or many centimetres, the fibre 20 is wound partly in the form of a coil 50 in order to provide additional delay such that the output signal of the current driver 40 arrives exactly at that time at the optical non-linear amplifier 45 when the packet of the optical signal which has to be multiplied according to the measurement made immediately before, has arrived at the amplifier 45. The additional delay should take into account the duration of time necessary for detecting the mean power after the begin of a packet, which duration may depend on the location, where in the packet the field containing a fixed pattern of bits is arranged. That location is preferably, but not necessarily, in the most forward region (the head) of a packet.

The example shown in fig. 5 represents a fast equaliser, which provides equalised output power of the optical signal at an output terminal 47 of the non-linear amplifier 45. In contrast to fig. 2, in the elements of fig. 5 the content of the payload of packets is not detected. In fig. 5 that part of an optical node or an optical exchange, where packets for a special destination are coupled out from the fibre 20 and sent as electrical signals or optical signals via another fibre to their destination, is not shown.

Tests with the arrangement of fig. 5 have been realised with 10 Gbit/s RZ and NRZ (return to zero, non return to zero, respectively) packets.

This invention could be used to create a packet-by-packet clock recovery. For this, a mixer using the signal and a local clock could give an information of the phase along the packet. With the first (at least roughly) known bits, it is possible to use the beginning of the packet as sample like in the former example. A high-speed phase shifter may be provided which is driven by this phase-information to align a local clock to the clock of a packet. This scheme, for example, could be used to realise regeneration of the signals in packet mode. The just mentioned possibilities are provided in a special example of the invention. The device of fig. 5 performs the steps 1 to 6 of claim 2, as is clear from the above description.

Fig. 6 shows a principle of an optical node or exchange with means for coupling out and coupling in packets from and to optical fibres and with an unit shown as in fig. 5 associated with each fibre which feeds optical signals to the node. Two optical fibres 20 are shown, each provided with a coil 50. For each fibre 20 the level of optical power of the individual packets is detected with an apparatus shown in fig. 5, and the optical power on the fibres is multiplied with a non-linear amplifier 45 as in fig. 5. The optical output signals from the non-linear multipliers 45 are accessed by interface and coupling means 60, 62 and 64. The means 60 couple out signals to optical fibres 61, the means 62 couple out signals to electrical lines 63, the means 64 couple signals from fibres and electric lines 65 onto the optical fibres 20.

The device of fig. 6 performs the steps 1 to 8 of claim 3, as is clear from the above description.

The best mode to carry out the invention is to recognise the first bit of the packet head and to stop the mean value formation at latest at the end of the packet head (preferably much earlier). However it will be apparent to the experts, that often the objects of the invention are obtained if a packet head is recognised only after some bits of it have passed, and that often the detected mean value is not affected much if some (not too many) bits of the payload (also if they are zeros) are included into the mean value formation.

## Claims

1. Device for determining level values in data flows comprising different level values,
**characterised by** means for performing the following steps:
1.) detecting the change between different part-data flows or packets,
2.) starting an integration of the next part-data flow,
3.) holding the output value of the integration device,
4.) deriving a level value from the output value of the integration device.

2. Input circuitry for data flows comprising different level values,
**characterised by** means for performing the following steps:
The steps 1 to 4 as mentioned in claim 1, and the following steps:
5.) delaying the data flow by the time which is needed for integration and deriving the level,
6.) applying the derived level value on to the delayed data flow.

3. Exchange for exchanging data flows comprising different level values,
**characterised by** means for performing the following steps:
The steps 1 to 6 as mentioned in claims 1 and 2, and the following steps:
7.) detecting from the data flow information necessary for exchanging,
8.) exchanging part-data flows of the data flow.

4. Device for determining power of a packet mode data transmission signal, two successive packets being separated by a guard interval (guard gap), and each packet comprising a field containing a generally fixed pattern of bits, **characterised in that** it comprises:
means for detecting the start region of each packet,
and means for determining the average power of the signal during a time interval corresponding to the pattern of bits, the value so obtained being considered as representative of the average power of this packet.

5. Optical power equaliser **characterised in that** it comprises a device according to claim 4 and / or means according to any of claims 1 to 3, and non-linear transmission means the gain of which is controlled by said device.

6. Device, circuitry, exchange or equaliser according to any preceding claim, **characterised in that** the means for integration comprise a low pass filter, a high pass filter, or a sample-and-hold means.

7. Device, circuitry, or exchange according to any of claims 1 to 4, or claim 6, characterised it is designed for optical signals.
